# EUROPEAN PATENT APPLICATION

(11) **EP 1 728 625 A1**
(43) Date of publication of application: **06.12.2006**
(21) Application number: 05076266.5
(22) Date of filing: 31.05.2005
(51) Int. Cl.: B32B 27/32, B65D 65/40

(54) **Multi-layer heat sealable packaging film**

(71) Applicant: Drukkerij Zwart B.V., 3812 RT Amersfoort (NL)
(72) Inventor: Schraa, Ronald, 8225 AV Lelystad (NL)
(74) Representative: Winckels, Johannes Hubertus F.

(57) **Abstract**

The invention provides a multi-layer heat sealable packaging film having an outermost film surface and an innermost film surface both facing away from the film, which film comprises:
- a heat resistant layer which comprises a heat resistant polymer;
- a barrier layer; and
- a heat sealable layer, which is peelable and comprises a heat sealable polymer;

wherein the outward facing surface of either the heat resistant layer or the barrier layer forms at least part of the outermost film surface, wherein the outward facing surface of the heat sealable layer forms at least part of the innermost film layer, and wherein a heat seal coating is provided on at least one of the two film surfaces in sealing zones of the at least one film surface for heat sealing the outermost film surface to the innermost film surface.

## Description

The present invention relates to a multiple-layer heat sealable packaging film, a heat-sealed packaging container formed from such a packaging film, and a method for packaging a product using such a packaging film.

Multi-layer heat sealable packaging films are widely used for packaging beverages and food products. When the product to be packaged needs to be protected against transmission of, for example, oxygen, moisture and light, such packaging films conventionally comprise in essence three layers, namely an innermost layer and an outermost layer which are both made of a heat sealable material and which can be sealed together by the application of heat, and a barrier layer which is arranged between the innermost and outermost layers. During the packaging process, the surfaces of such innermost and outermost layers are sealed together under application of heat to form a lab seal which will run longitudinally along the package, whereas the innermost layer is sealed to another part of the innermost layer under application of heat to form the seals in the transveral zones of the package at the upper and bottom parts of the package. At both the side of the lab seal, and the side opposite thereof, seals are made at the upper and lower part of the package in such a way that a fold is formed that is at least partly directed inwards, thus forming side parts of the package. The side parts of the package are divided in two outwards facing surfaces, which lie at both sides of the inward directed fold. Said surfaces are sealed together by the application of heat in the upper and lower part of the package. To establish this, at the side of the lab seal, two pairs of surfaces of the innermost layer, one pair of surfaces of the outermost layer, and one pair of surfaces consisting of a surface of the innermost layer and a surface of the outermost layer (forming the lab seal) are respectively sealed together at the upper and lower part of the package. At the side opposite of the lab seal, two pairs of surfaces of the innermost layer, and one pair of surfaces of the outer layer are respectively sealed together at the upper and lower part of the package. To make sure that the folds that form the side parts are properly directed inwardly, the side parts can be provided with two outwardly directed folds which run longitudinally along the package. Said outwardly directed folds are formed by sealing parts of the innermost layer together. It will be understood that the inward directed folds so obtained run along the longitudinal direction of the package. Stand-up packages produced from such packaging films have, however, the drawback that upon opening of the package along the transversal upper sealing zone, the mutli-layer film of the package is usually badly damaged even when a peelable innermost layer is used which is most undesirable because such damaged packages cannot any longer be used to store the product contained therein in a proper manner. Object of the present invention is to overcome the above problem.

Surprisingly, it has now been found that the above problem can be overcome when the package is formed from a multi-layer film which comprises a barrier layer, a heat sealable layer, a heat resistant layer, and a heat seal coating.

Accordingly, the present invention relates to a multi-layer heat sealable packaging film having an outermost film surface and an innermost film surface both facing away from the film, which film comprises:
- a heat resistant layer which comprises a heat resistant polymer;
- a barrier layer; and
- a heat sealable layer, which is peelable and comprises a heat sealable polymer;
wherein the outward facing surface of either the heat resistant layer or the barrier layer forms at least part of the outermost film surface, wherein the outward facing surface of the heat sealable layer forms at least part of the innermost film layer, and wherein a heat seal coating is provided on at least one of the two film surfaces in a longitudinal sealing zone of the at least one film surface for heat sealing the outermost film surface to the innermost film surface.

In the context of the present invention, a peelable layer is defined as a layer of which different parts can be sealed together by the application of heat, after which the seal so obtained can be easily opened without causing any substantial or major damage to the respective different parts.

When a heat-sealed stand-up package is formed from the packaging film in accordance with the present invention, the outermost film surface of the package will consist at least partly of the outward facing surface of either the heat resistant layer or the barrier layer. During the formation of such packages, the sealing zone of the outermost film surface is brought in contact with the sealing zone of the innermost film surface, after which the respective film surfaces are sealed to each other by means of the heat seal coating under application of heat. Heat sealed stand-up packages so formed have the advantage that the sealings obtained at the upper part of such a package open very smoothly without tearing the multi-layer film of the package. This due to the fact that in the sealings now obtained at the upper side parts of the package, only four and five heat sealable layers are respectively sealed together, whereas two of the respective two or three remaining heat resistant layers are not sealed together, allowing opening of the package to occur without tearing apart the multi-layer film of the package.

The sealing of the respective film surfaces suitably takes place at a temperature in the range of from 80 to 200°C, preferably in the range of from 120 to 140°C.

Suitably, in accordance with the present invention the outward facing surface of the heat resistant layer forms at least part of the outermost film surface, and the barrier layer is arranged between the heat resistant layer and the heat seal layer. Preferably, the outward facing layer of the heat resistance layer forms the entire outermost film surface, and the barrier layer is arranged between the heat resistant layer and the heat seal layer.

In a preferred embodiment of the present invention, the outward facing surface of the heat sealable layer forms the entire innermost film surface.

In accordance with the present invention the heat seal coating is provided on at least one of the film surfaces in a longitudinal sealing zone of the at least one film surface. Preferably, the heat seal coating is provided on the outermost film surface in a longitudinal sealing zone of the outermost film surface. The heat seal coating will be applied on the entire sealing zone to ensure that a leak-free lab seal will be obtained. Usually, the longitudinal sealing zone will run along the entire film.

In a particular attractive embodiment of the present invention, the outward facing surface of the heat resistant layer forms at least part of the outermost film layer, whereas an additional heat resistant layer which comprises a heat resistant polymer is arranged between the barrier layer and the heat sealable layer. Preferably, the outward facing surface of the heat resistant layer form the entire outermost film surface.

The one or more heat resistant layers used in accordance with the present invention preferably comprise polyester or polyamide, more preferably polyester. It will be understood that the heat resistant layer is not sealable to itself. This makes sure that at each site of the package two surfaces of the outermost layer stand free in respect of each other.

Preferably, in accordance with the present invention the heat sealable polymer is a polymer selected from the group consisting of polyethylene, polypropylene, polybutylene or a copolymer of any of these polymers.

Preferably, the barrier layer is an oxygen barrier layer, which comprises ethylene-vinyl alcohol copolymer (EVOH), a metallized film, a copolymer of poly vinyl dichloride (PVDC), a metal foil, a metal oxide, or an metal oxide coated film. The metallized film may suitably comprise a metal foil, for instance, an aluminium foil which has been applied onto a polymer film. The metal oxide can suitably be aluminium oxide or silicon oxide, whereas the film upon which such a metal oxide may be coated can suitably be a polymer film.

The heat seal coating may be any known heat seal coating useful for preparing packages.

Preferably, the heat seal coating comprises ethylene vinyl acetate.

Suitably, an ink layer can be arranged between the barrier layer and heat resistant layer of which the outward facing surface forms at least part of the outermost film surface.

The present invention also relates to a heat sealed packaging container which comprises a lab seal and which is formed from a multi-layer heat sealable packaging film in accordance with the present invention. Such package is formed as follows. The lab seal is established by sealing under application of heat the innermost layer and the outermost layer together, using the heat seal coating. Subsequently, at the side of the lab seal, two pairs of surfaces of the innermost layer, one pair of surfaces of the outermost layer, and one pair of surfaces consisting of a surface of the innermost layer and a surface of the outermost layer (forming the lab seal) are respectively sealed together at the upper and lower part of the package. At the side opposite of the lab seal, two pairs of surfaces of the innermost layer, and one pair of surfaces of the outer layer are respectively sealed together at the upper and lower part of the package. Folds are thus obtained that are at least party directed inwardly and which run longitudinally along the package. Said folds form the side parts of the package. The side parts of the package are divided in two outwards facing surfaces, which lie at both sides of the inward directed fold. Said surfaces stand free in respect of each other. To establish that the folds that form the side parts are properly directed inwardly, the side parts can be provided with two outwardly directed folds which run longitudinally along the package. Said outwardly directed folds are formed by sealing parts of the innermost layer together. The innermost layer is sealed to another part of the innermost layer by the application of heat to form the seals in the transveral zones of the package at the upper and bottom parts of the package. The heat sealable layer that is used for this purpose is peelable, which means that the seals in the transveral zones can be opened without causing any substantial or major damage to the respective parts of the innermost layer that are sealed together. The innermost and outermost layers will suitably extend upwardly beyond the seal in the upper transveral zone, thus creating a grip by means of which the package can be opened at the upper part of the package.

In such a package only four and five heat sealable layers are respectively sealed together at each side of the package, whereas two of the respective two or three remaining heat resistant layers are not sealed together, allowing opening of the package to occur without tearing apart the multi-layer film of the package.

In addition, the present invention also relates to a method for packaging a product in which the product is packaged using a multi-layer heat sealable packaging film according to the present invention.

## Claims

1. A multi-layer heat sealable packaging film having an outermost film surface and an innermost film surface both facing away from the film, which film comprises:
- a heat resistant layer which comprises a heat resistant polymer;
- a barrier layer; and
- a heat sealable layer, which is peelable and comprises a heat sealable polymer;
wherein the outward facing surface of either the heat resistant layer or the barrier layer forms at least part of the outermost film surface, wherein the outward facing surface of the heat sealable layer forms at least part of the innermost film layer, and wherein a heat seal coating is provided on at least one of the two film surfaces in sealing zones of the at least one film surface for heat sealing the outermost film surface to the innermost film surface.

2. A packaging layer according to claim 1, wherein the outward facing surface of the heat resistant layer forms at least part of the outermost film surface, and the barrier layer is arranged between the heat resistant layer and the heat seal layer.

3. A packaging layer according to claim 2, wherein the outward facing layer of the heat resistance layer forms the entire outermost film surface.

4. A packaging film according to any one of claims 1-3, wherein the outward facing surface of the heat sealable layer forms the entire innermost film surface.

5. A packaging film according to any one of claims 1-4, wherein the heat seal coating is provided on the outermost film surface in sealing zones of the outermost film surface.

6. A packaging film according to any one of claims 2-5, wherein an additional heat resistant layer which comprises a heat resistant polymer is arranged between the barrier layer and the heat sealable layer.

7. A packaging film according to any one of claims 1-6, wherein the heat resistant layer(s) comprise(s) polyester or polyamide.

8. A packaging film according to any one of claims 1-6, wherein the heat resistant layer(s) comprise(s) polyester.

9. A packaging film according to any one of claims 1-7, wherein the heat sealable polymer is a polymer selected from the group consisting of polyethylene, polypropylene, polybutylene or a copolymer of any of these polymers.

10. A packaging film according to any one of claims 1-9, wherein the barrier layer is an oxygen barrier layer which comprises ethylene-vinyl alcohol copolymer (EVOH), a metallized film, a copolymer of poly vinyl dichloride (PVDC), a metal foil, a metal oxide, or an metal oxide coated film.

11. A packaging film according to any one of claims 1-9, wherein the heat seal coating comprises ethylene vinyl acetate.

12. A packaging film according to any one of claims 2-11, wherein an ink layer is arranged between the barrier layer and the heat resistant layer of which the outward facing surface forms at least part of the outermost film surface.

13. A heat-sealed packaging container which comprises a lab seal and which is formed from a packaging film according to any one of claims 1-12.

14. A method for packaging a product in which the product is packaged using a packaging film according to any one of claims 1-13.
